# FASCICULE DE BREVET EUROPEEN

(11) **EP 1 149 527 B1**
(45) Date de publication et mention de la délivrance du brevet: **02.01.2004**
(21) Numéro de dépôt: 01440112.9
(22) Date de dépôt: 18.04.2001
(51) Int. Cl.: A01K 5/00, A01F 29/00, A01F 29/12

(54) **Machine agricole pour la distribution de produits**
Landmaschine zum Verteilen von Produkten
Agricultural machine for the distribution of products

(30) Priorité: 28.04.2000 FR 0005484
(43) Date de publication de la demande: 31.10.2001
(73) Titulaire: Kuhn-Audureau S.A., 85260 La Copechagniere (FR)
(72) Inventeur: Rostoucher, Guy, 85170 Belleville sur vie (FR); Berniche, Alexandre, 85000 La Roche sur Yon (FR); Rulleau, Samuel, 85140 Chauche (FR)
(74) Mandataire: Andres, Jean-Claude

(56) Documents cités:
- FR-A- 2 560 491
- FR-A- 2 598 059
- FR-A- 2 618 633
- GB-A- 1 081 031
- GB-A- 1 205 135

## Description

La présente invention se rapporte à une machine agricole pour la distribution de produits aux animaux, comportant notamment un caisson, un carter sur un côté du caisson, lequel carter comprend une paroi latérale avec un orifice d'entrée orienté vers l'intérieur du caisson et une paroi périphérique avec un orifice de sortie, et une turbine de distribution montée tournante dans ce carter au moyen d'un axe central, ladite turbine se composant d'un plateau équipé de pales sensiblement radiales qui s'étendent jusqu'à proximité de la périphérie du carter.

Une telle machine permet de distribuer de la nourriture telle que du foin ou de l'ensilage aux animaux ou bien de projeter de la paille sur leurs litières. Lesdits produits sont chargés dans le caisson et sont acheminés dans le carter par exemple à l'aide d'un tambour démêleur. Ils arrivent ainsi aux pales de distribution de la turbine qui les entraînent dans leur mouvement de rotation et les projettent hors du carter par l'ouverture périphérique.

Une machine de ce genre est connue dans la demande de brevet FR 2 687 650. Sur une telle machine, il arrive, notamment lors de la distribution de végétaux à brins longs, que des paquets de ces produits s'accrochent aux pales. Ils se coincent alors entre les extrémités des pales et la paroi périphérique du carter et provoquent rapidement le blocage de la turbine. L'utilisateur doit immédiatement arrêter le travail et est obligé d'accéder à l'intérieur du carter pour sortir les produits accrochés aux pales. Cette opération est longue et pénible en raison de la mauvaise accessibilité auxdites pales.

La demande de brevet FR 2 618 633 s'adresse à un dispositif d'épandage qui comporte une turbine d'éjection avec quatre pales montées sur un moyeu central au moyen d'axes de pivotement. Ces derniers permettent aux pales de s'effacer vers l'arrière si elles rencontrent des obstacles. En raison de cet agencement, la position des pales n'est pas stable durant le travail. L'angle et la distance de projection des produits varient ainsi constamment, ce qui ne permet pas d'obtenir une distribution régulière.

La présente invention a pour but de remédier aux inconvénients précités des machines connues. Elle doit notamment faciliter le dégagement des pales en cas de coincement de produits au niveau de leurs extrémités tout en assurant une distribution régulière.

A cet effet, une importante caractéristique de l'invention consiste en ce que les extrémités des pales qui se situent près de la périphérie du carter sont constituées par des segments qui sont articulés sur des axes sensiblement parallèles à l'axe de rotation central de la turbine et autour desquels lesdits segments peuvent se déplacer, à partir de la position de travail, uniquement vers l'avant dans le sens de rotation de la turbine. Durant le travail, lorsque la turbine est entraînée en rotation, les segments articulés des pales sont arrêtés dans une position plus ou moins radiale sous l'effet de la force centrifuge. Cet agencement est particulièrement avantageux pour la distribution de produits lourds ou pour la projection de paille à une grande distance, du fait qu'il évite l'escamotage desdits segments durant le travail. La stabilité des pales permet aussi d'obtenir une distribution très régulière. En cas de coincement de produits entre des segments articulés et la paroi périphérique du carter, il suffit de faire tourner la turbine quelque peu dans le sens opposé à son sens de rotation normal durant le travail. Les extrémités articulées s'escamotent alors dans la direction opposée et libèrent automatiquement les produits coincés. Ces produits sont alors dispersés par les pales suivantes dès que la rotation dans le sens normal reprend. L'intervention de l'utilisateur pour dégager la turbine est de courte durée et est facile à effectuer.

Avantageusement, la largeur des segments articulés des pales est supérieure à celle des segments fixes et lesdits segments articulés s'étendent partiellement dans le prolongement du plateau. Cette disposition permet d'augmenter l'effet de soufflerie et améliore la distribution des produits.

Selon une autre caractéristique, la distance entre les segments articulés et la paroi du carter qui comporte l'orifice d'entrée est nettement plus importante que la distance entre lesdits segments articulés et la paroi opposée dudit carter. Il existe ainsi un espace libre entre l'entrée des produits et les segments articulés qui favorise le décompactage desdits produits. Ceci permet notamment d'obtenir une distribution plus régulière.

D'autres caractéristiques et avantages de l'invention ressortiront de la description qui va suivre et qui se réfère aux dessins annexés qui représentent, à titre d'exemples non limitatifs, quelques formes de réalisation de l'invention.

Dans ces dessins :
- la figure 1 représente une vue d'ensemble d'une machine selon l'invention,
- la figure 2 représente une coupe à travers le dispositif de distribution,
- la figure 3 représente une vue de détail d'un exemple de réalisation de la turbine.

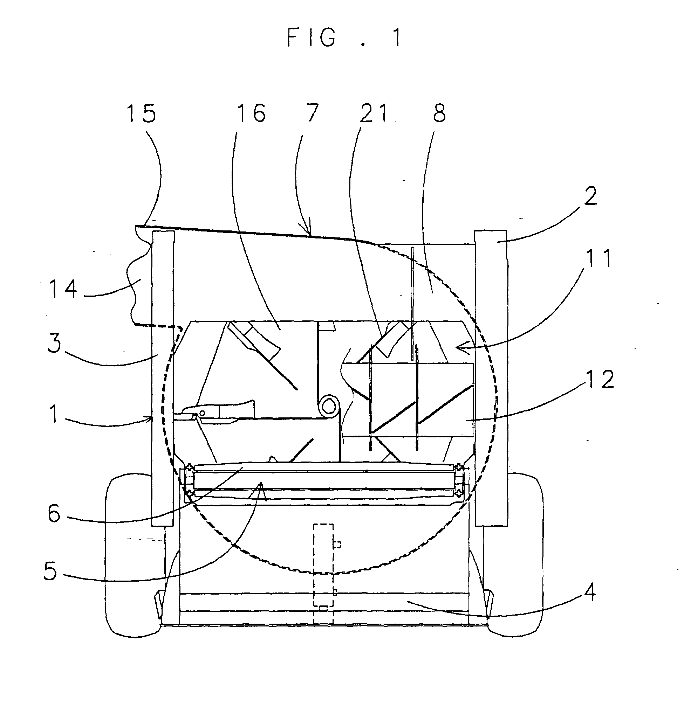

Telle qu'elle est représentée sur les figures 1 et 2, la machine selon l'invention comporte un caisson (1) avec deux parois latérales (2 et 3) et une paroi arrière (4) formant une porte de chargement. Le fond du caisson (1) est constitué par un plancher (5) avec un dispositif de déplacement (6) des produits qui est composé de barres transversales entraînées par des chaînes.

Sur le côté avant du caisson (1) est disposé un carter (7) comprenant deux parois latérales (8 et 9) et une paroi périphérique (10). La paroi latérale (8) possède un orifice d'entrée (11) qui est orienté vers l'intérieur du caisson (1). Face à cet orifice (11) est prévu un tambour démêleur (12) monté rotatif sur les parois latérales (2 et 3) du caisson (1). Ce tambour est équipé de couteaux (13) pour le démêlage des produits qui sont chargés dans le caisson (1). La paroi périphérique (10) du carter (7) possède un orifice de sortie (14) sur lequel est adaptée une goulotte (15). Dans ledit carter (7) est montée une turbine (16). Celle-ci se compose d'un plateau (17) sensiblement vertical avec un axe central (18) sensiblement horizontal qui est monté de manière à pouvoir tourner dans un palier (19) de la paroi latérale (9) du carter (7). Cette paroi (9) porte sur son côté extérieur un carter de distribution (20) à partir duquel sont entraînés la turbine (16), le tambour démêleur (12) et les chaînes du dispositif de déplacement (6).

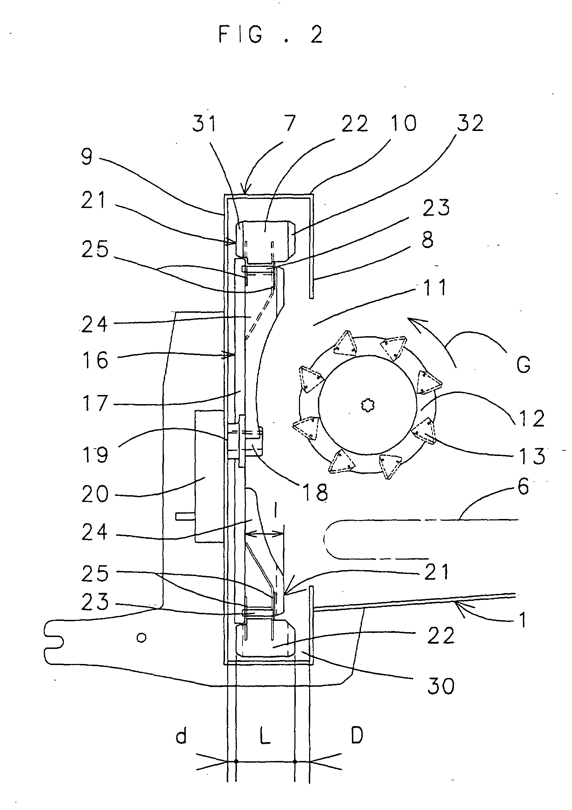

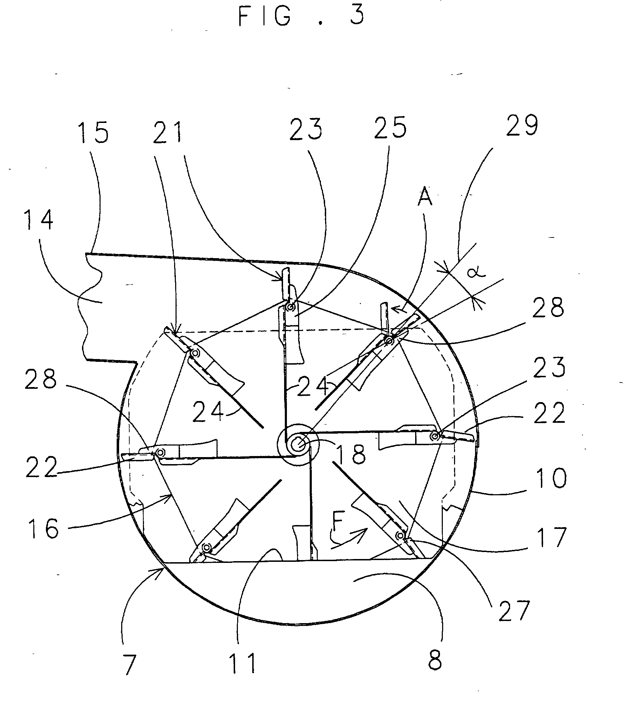

Comme cela ressort notamment des figures 2 et 3, le plateau (17) est équipé de pales (21) plus ou moins radiales qui s'étendent jusqu'à proximité de la périphérie du carter (7). Les extrémités de ces pales (21) qui sont voisines de ladite périphérie sont constituées par des segments (22) qui sont articulés sur des axes (23) sensiblement parallèles à l'axe central (18) de la turbine (16). Les parties restantes des pales (21 ) constituent des segments fixes (24) qui sont liés au plateau (17). Les segments articulés (22) s'étendent sensiblement dans le prolongement des segments fixes (24). Ils peuvent être directement alignés avec lesdits segments fixes (24) ou être décalés et se situer légèrement en arrière de ces derniers, vu dans le sens de rotation (F) de la turbine (16).

Les axes d'articulation (23) des segments articulés (22) sont logés dans des pattes (25) solidaires du plateau (17) et des segments fixes (24) correspondants. Ces axes (23) se situent près du bord extérieur du plateau (17) et les segments articulés (22) s'étendent au-delà dudit bord. Ce dernier peut alors être suffisamment éloigné de la paroi périphérique (10) du carter (7) pour éviter tout risque de coincement de produits entre eux.

Dans l'exemple selon la figure 3 les segments articulés (22) peuvent se déplacer autour de leurs axes d'articulation (23), à partir de la position de travail, uniquement vers l'avant dans le sens de rotation (F) de la turbine (16). Le plateau ( 17) comporte des butées (28) qui se situent, par rapport au sens de rotation (F) de la turbine (16), à l'arrière des segments articulés (22). Les segments articulés (22) se plaquent contre les butées (28) durant le travail sous l'effet de la force centrifuge. Ces butées (28) sont constituées par des languettes soudées sur le plateau (17). Elles peuvent être disposées de telle sorte que les segments articulés (22) forment en position normale de travail des angles (α) de 1 à 20° avec des droites radiales (29) passant par leurs axes d'articulation (23). Ces positions sont représentées sur le côté droit de la turbine (16). Les segments fixes (24) des pales (21) peuvent également être inclinés de manière à former les mêmes angles (α) que les segments articulés (22) avec les droites radiales (29). La position inclinée des segments articulés (22) et fixes (24) favorise l'éjection des produits par la sortie (14). L'angle de déplacement vers l'avant des segments articulés (22) autour des axes d'articulation (23) est d'environ 45° à partir d'une position radiale (flèche A). Ce déplacement vers l'avant est limité au moyen d'appuis (27) qui rencontrent les segments fixes (24) ou le plateau (17) dans la position extrême.

La largeur (L) des segments articulés (22) est supérieure à la largeur (1) des segments fixes (24) des pales (21) (voir figure 2). De ce fait, les segments articulés (22) s'étendent avantageusement partiellement dans le prolongement du plateau (17) et sont à une faible distance (d) de la paroi latérale avant (9) du carter (7). Cette largeur (L) permet d'augmenter l'effet de soufflerie. Elle permet aussi aux segments articulés (22) d'assurer un meilleur nettoyage de la face intérieure de la paroi latérale avant (9) afin d'éviter l'accumulation de produits contre celle-ci. La distance (D) entre les segments articulés (22) et la paroi latérale arrière (8) qui comporte l'orifice d'entrée (11) du carter (7) est nettement plus importante que la distance (d) entre lesdits segments (22) et la paroi avant (9) du carter (7). Cette distance (D) est égale ou supérieure au double de la distance (d). L'espace (30) qui est libre entre les segments (22) et la paroi arrière (8) du carter (7) favorise le décompactage des produits avant qu'ils n'arrivent aux pales (21).

Les segments articulés (22) comportent des bords latéraux (31 et 32) qui sont inclinés dans la direction de rotation (F) de la turbine (16). Grâce à ces bords (31 et 32) lesdits segments (22) ramassent les produits dans le fond du carter (7) à la manière de cuillères.

Les segments articulés (22) peuvent être réalisés en plusieurs parties situées côte à côte sur le même axe d'articulation (23). Ce mode de réalisation qui n'est pas représenté sur les dessins permet à chaque partie de se déplacer séparément des autres parties, en fonction de la masse de produits qu'elle rencontre.

Pour la distribution des produits, la machine est accrochée à un tracteur ou à un chariot élévateur. L'utilisateur charge les produits, en vrac ou sous forme de balles, dans le caisson (1) et se rend sur le lieu de distribution. Il enclenche ensuite l'entraînement de la machine. La turbine (16) et le tambour démêleur (12) tournent alors dans les sens indiqués par les flèches (F) et (G). De plus, le dispositif de déplacement (6) est animé de sorte qu'il ramène les produits qui sont dans le caisson (1) vers le tambour (12) et la turbine (16). Les produits démêlés par ledit tambour (12) tombent dans l'espace de décompactage (30) du carter (7) et arrivent aux pales (21). Les segments articulés (22) s'étendent vers la paroi périphérique (10) sous l'effet de la force centrifuge et sont maintenus en position de travail par les butées (28). Les pales (21) entraînent les produits dans leur mouvement de rotation et les projettent hors du carter (7) par l'orifice de sortie (14). Ils peuvent alors être guidés à l'aide de la goulotte (15) vers des auges ou vers les litières des animaux.

La distribution est alors très régulière même lorsqu'il s'agit de produits lourds tels que de l'herbe enrubannée. Au cas ou des paquets accrochés aux segments articulés (22) venaient à freiner l'entraînement de la turbine (16), l'utilisateur inverse son sens de rotation. Cela peut être effectué soit avec un inverseur de marche ou en actionnant manuellement ladite turbine (16). Immédiatement les segments articulés (22) pivotent autour de leurs axes (23) et s'escamotent dans la direction opposée à ce nouveau sens de rotation de la turbine (16). Ils libèrent ainsi les paquets de produits qui retombent dans le fond du carter (7). Ensuite l'utilisateur peut poursuivre l'opération de distribution en faisant à nouveau tourner la turbine (16) dans le sens (F).

Il est bien évident que l'invention n'est pas limitée aux modes de réalisation décrits ci-dessus et représentés sur les dessins annexés. Des modifications sont possibles, notamment en ce qui concerne la constitution ou le nombre des divers éléments ou par substitution d'équivalents techniques sans pour autant sortir du domaine de protection tel que défini dans les revendications. L'invention pourra également s'appliquer à des machines de distribution équipées de moyens de recyclage pour mélanger différents produits dans le caisson (1).

## Revendications

1. Machine agricole pour la distribution de produits aux animaux, comportant notamment un caisson (1) apte à recevoir les produits, un carter (7) disposé sur un côté du caisson (1), lequel carter (7) possède une paroi latérale (8) avec un orificé d'entrée (11) orienté vers l'intérieur du caisson (1) et une paroi périphérique (10) avec un orifice de sortie (14), et une turbine de distribution (16) qui est montée tournante dans ce carter (7) au moyen d'un axe central (18), ladite turbine (16) se composant d'un plateau (17) et de pales (21) sensiblement radiales qui s'étendent jusqu'à proximité de la périphérie du carter (7), ***caractérisée par le fait* que** les extrémités des pales (21) qui se situent près de la périphérie du carter (7) sont constituées par des segments (22) qui sont articulés sur des axes (23) sensiblement parallèles à l'axe central (18) de la turbine (16) et autour desquels lesdits segments (22) peuvent se déplacer, à partir de la position de travail, uniquement vers l'avant dans le sens de rotation (F) de la turbine (16).

2. Machine selon la revendication 1, ***caractérisée par le fait* que** le plateau (17) de la turbine (16) comporte des butées (28) qui se situent, par rapport au sens de rotation (F) de ladite turbine (16), à l'arrière des segments articulés (22).

3. Machine selon la revendication 2, ***caractérisée par le fait* que** les butées (28) sont disposées de telle sorte que les segments articulés (22) forment, en position normale de travail, des angles (α) de 1° à 20° avec des droites radiales (29) passant par leurs axes d'articulation (23).

4. Machine selon la revendication 3, ***caractérisée par le fait* que** les segments fixes (24) des pales (21) forment les mêmes angles (α) de 1° à 20° avec des droites radiales (29) passant par les axes d'articulation (23) des segments articulés.

5. Machine selon l'une quelconque des revendications 1 à 4, ***caractérisée par le fait* que** les segments articulés (22) peuvent se déplacer d'environ 45° vers l'avant autour des axes d'articulation (23).

6. Machine selon l'une quelconque des revendications précédentes, ***caractérisée par le fait* que** les segments articulés (22) possèdent une largeur (L) supérieure à la largeur (1) des segments fixes (24) et qu'ils s'étendent partiellement dans le prolongement du plateau (17).

7. Machine selon l'une quelconque des revendications précédentes, ***caractérisée par le fait* que** les pales (21) comportent des parties fixes (24) qui sont liées au plateau (17) et que les segments articulés (22) s'étendent sensiblement dans le prolongement desdits segments fixes (24).

8. Machine selon la revendication 7, ***caractérisée par le fait* que** les axes d'articulation (23) des segments articulés (22) se situent près du bord extérieur du plateau (17) et que lesdits segments (22) s'étendent au-delà du plateau (17).

9. Machine selon la revendication 5, ***caractérisée par le fait* que** les déplacements des segments articulés (22) autour de leurs axes d'articulation (23) sont limités au moyen des parties fixes (24) et/ou du plateau (17).

10. Machine selon la revendication 5 ou 9, ***caractérisée par le fait* que** les segments articulés (22) comportent des appuis (27).

11. Machine selon l'une quelconque des revendications précédentes, ***caractérisée par le fait* que** la distance (D) entre les segments articulés (22) et la paroi latérale (8) du carter (7) avec l'orifice d'entrée (11) est nettement plus importante que la distance (d) entre lesdits segments articulés (22) et la paroi latérale opposée (9) dudit carter (7).

12. Machine selon l'une quelconque des revendications précédentes, ***caractérisée par le fait* que** les segments articulés (22) comportent des bords latéraux (31 et 32) inclinés vers la direction de rotation (F) de la turbine (16).

13. Machine selon l'une quelconque des revendications précédentes, ***caractérisée par le fait* que** les segments articulés (22) sont réalisés en plusieurs parties situées côte à côte.

## Patentansprüche

1. Landmaschine zur Verteilung von Gut an Tiere, die insbesondere einen Behälter (1) zur Aufnahme des Guts, ein auf einer Seite des Behälters (1) angeordnetes Gehäuse (7) mit einer Seitenwand (8), die eine zum Innenraum des Behälters (1) ausgerichtete Einlassöffnung (11) enthält, und einer Umfangswand (10), die eine Auslassöffnung (14) enthält, und eine Verteilturbine (16), die mittels einer mittleren Achse (18) drehbar in diesem Gehäuse (7) angebracht ist, aufweist, wobei die Turbine (16) aus einer Scheibe (17) und im Wesentlichen radialen Schaufeln (21) besteht, die sich bis in die Nähe des Umfangs des Gehäuses (7) erstrecken, ***dadurch gekennzeichnet,* dass** die sich in der Nähe des Umfangs des Gehäuses (7) befmdenden Enden der Schaufeln (21) durch Segmente (22) gebildet werden, die an im Wesentlichen parallel zur mittleren Achse (18) der Turbine (16) verlaufenden Achsen (23) angelenkt sind, um die sich die Segmente (22) aus der Arbeitsstellung einzig nach vorne in Drehrichtung (F) der Turbine (16) bewegen können.

2. Maschine nach Anspruch 1, ***dadurch gekennzeichnet,* dass** die Scheibe (17) der Turbine (16) Anschläge (28) aufweist, die sich bezüglich der Drehrichtung (F) der Turbine (16) am hinteren Teil der angelenkten Segmente (22) befinden.

3. Maschine nach Anspruch 2, ***dadurch gekennzeichnet,* dass** die Anschläge (28) so angeordnet sind, dass die angelenkten Segmente (22) in Normalarbeitsstellung Winkel (α) von 1° bis 20° mit durch ihre Gelenkachsen (23) verlaufenden radialen Geraden (29) bilden.

4. Maschine nach Anspruch 3, ***dadurch gekennzeichnet,* dass** die feststehenden Segmente (24) der Schaufeln (21) die gleichen Winkel (α) von 1° bis 20° mit durch die Gelenkachsen (23) der angelenkten Segmente verlaufenden radialen Geraden (29) bilden.

5. Maschine nach irgend einem der Ansprüche 1 bis 4, ***dadurch gekennzeichnet,* dass** sich die angelenkten Segmente (22) um die Gelenkachsen (23) um ca. 45° nach vorne verschieben können.

6. Maschine nach irgend einem der vorhergehenden Ansprüche, ***dadurch gekennzeichnet,* dass** die angelenkten Segmente (22) eine Breite (L) besitzen, die größer ist als die Breite (1) der feststehenden Segmente (24), und dass sie sich teilweise in der Verlängerung der Scheibe (17) erstrecken.

7. Maschine nach irgend einem der vorhergehenden Ansprüche, ***dadurch gekennzeichnet,* dass** die Schaufeln (21) feststehende Teile (24) aufweisen, die mit der Scheibe (17) verbunden sind, und dass sich die angelenkten Segmente (22) im Wesentlichen in der Verlängerung der feststehenden Segmente (24) erstrecken.

8. Maschine nach Anspruch 7, ***dadurch gekennzeichnet,* dass** sich die Gelenkachsen (23) der angelenkten Segmente (22) in der Nähe des Außenrands der Scheibe (17) befinden und dass sich die Segmente (22) über die Scheibe (17) hinaus erstrecken.

9. Maschine nach Anspruch 5, ***dadurch gekennzeichnet,* dass** die Bewegungen der angelenkten Segmente (22) um ihre Gelenkachsen (23) mittels der feststehenden Teilen (24) und/oder der Scheibe (17) begrenzt werden.

10. Maschine nach Anspruch 5 oder 9, ***dadurch gekennzeichnet,* dass** die angelenkten Segmente (22) Halteglieder (27) aufweisen.

11. Maschine nach irgend einem der vorhergehenden Ansprüche, ***dadurch gekennzeichnet,* dass** der Abstand (D) zwischen den angelenkten Segmenten (22) und der Seitenwand (8) des Gehäuses (7) mit der Einlassöffnung (11) deutlich größer ist als der Abstand (d) zwischen den angelenkten Segmenten (22) und der gegenüberliegenden Seitenwand (9) des Gehäuses (7).

12. Maschine nach irgend einem der vorhergehenden Ansprüche, ***dadurch gekennzeichnet,* dass** die angelenkten Segmente (22) in Drehrichtung (F) der Turbine (16) geneigte Seitenränder (31 und 32) aufweisen.

13. Maschine nach irgend einem der vorhergehenden Ansprüche, ***dadurch gekennzeichnet,* dass** die angelenkten Segmente (22) in mehreren nebeneinander liegenden Teilen ausgeführt sind.

## Claims

1. Agricultural machine for distributing products to animals, comprising in particular a tank (1) able to receive the products, a casing (7) arranged on one side of the tank (1), which casing (7) has a side wall (8) with an inlet orifice (11) oriented towards the inside of the tank (1) and a peripheral wall (10) with an outlet orifice (14), and a distribution turbine (16) which is mounted so that it can revolve in this casing (7) by means of a central shaft (18), the said turbine (16) being made up of a plate (17) and of substantially radial blades (21) which extend up close to the periphery of the casing (7), ***characterized in* that** the ends of the blades (21) which lie near the periphery of the casing (7) consist of segments (22) which are articulated on shafts (23) substantially parallel to the central shaft (18) of the turbine (16) and about which the said segments (22) can move, from the work position, only forward in the direction of rotation (F) of the turbine (16).

2. Machine according to Claim 1, ***characterized in* that** the plate (17) of the turbine (16) has stops (28) which, with respect to the direction of rotation (F) of the said turbine (16), lie behind the articulated segments (22).

3. Machine according to Claim 2, ***characterized in* that** the stops (28) are arranged in such a way that the articulated segments (22) in the normal work position form angles (α) of 1° to 20° with radial straight lines (29) passing through their articulation shafts (23).

4. Machine according to Claim 3, ***characterized in* that** the fixed segments (24) of the blades (21) form the same angles (α) from 1° to 20° with radial straight lines (29) passing through the articulation shafts (23) of the articulated segments.

5. Machine according to any one of Claims 1 to 4, ***characterized in* that** the articulated segments (22) can move through about 45° forwards about the articulation shafts (23).

6. Machine according to any one of the preceding claims, ***characterized in* that** the articulated segments (22) have a width (L) greater than the width (1) of the fixed segments (24) and **in that** they extend partially in the continuation of the plate (17).

7. Machine according to any one of the preceding claims, ***characterized in* that** the blades (21) have fixed parts (24) which are connected to the plate (17) and **in that** the articulated segments (22) extend substantially in the continuation of the said fixed segments (24).

8. Machine according to Claim 7, ***characterized in* that** the articulation shafts (23) of the articulated segments (22) lie near to the outer edge of the plate (17) and **in that** the said segments (22) extend beyond the plate (17).

9. Machine according to Claim 5, ***characterized in* that** the movements of the articulated segments (22) about their articulation shafts (23) are limited by means of the fixed parts (24) and/or of the plate (17).

10. Machine according to Claim 5 or 9, ***characterized in* that** the articulated segments (22) have rests (27).

11. Machine according to any one of the preceding claims, ***characterized in* that** the distance (D) between the articulated segments (22) and the side wall (8) of the casing (7) with the inlet orifice (11) is markedly greater than the distance (d) between the said articulated segments (22) and the opposite side wall (9) of the said casing (7).

12. Machine according to any one of the preceding claims, ***characterized in* that** the articulated segments (22) have lateral edges (31 and 32) which are inclined towards the direction of rotation (F) of the turbine (16).

13. Machine according to any one of the preceding claims, ***characterized in* that** the articulated segments (22) are made in several parts situated side by side.
